# EUROPÄISCHE PATENTSCHRIFT

(11) **EP 3 069 419 B1**
(45) Veröffentlichungstag und Bekanntmachung des Hinweises auf die Patenterteilung: **18.07.2018**
(21) Anmeldenummer: 14803063.8
(22) Anmeldetag: 06.11.2014
(51) Int. Cl.: H01R 43/02

(54) **VORRICHTUNG ZUM VERSCHWEISSEN VON ELEKTRISCHEN LEITERN**
DEVICE FOR WELDING ELECTRIC CONDUCTORS
DISPOSITIF DE SOUDAGE DE CONDUCTEURS ÉLECTRIQUES

(30) Priorität: 11.11.2013 DE 102013222938
(43) Veröffentlichungstag der Anmeldung: 21.09.2016
(73) Patentinhaber: Schunk Sonosystems GmbH, 35435 Wettenberg (DE)
(72) Erfinder: STROBEL, Heiko, 35516 Münzenberg (DE); WAGNER, Peter, 35435 Wettenberg (DE); STROH, Dieter, 35435 Wettenberg (DE)
(74) Vertreter: advotec.
(86) Internationale Anmeldenummer: PCT/EP2014/073941
(87) Internationale Veröffentlichungsnummer: WO 2015/067700

(56) Entgegenhaltungen:
- EP-A1- 1 765 545
- US-A- 5 815 916
- US-A1- 2003 181 100

## Beschreibung

Die vorliegende Erfindung betrifft eine Vorrichtung zum Verschweißen von stabförmigen, mit einer äußeren isolierenden Umhüllung versehenen elektrischen Leitern, die von der Umhüllung befreite Blankbereiche aufweisen, deren Länge durch eine axiale Umhüllungsendfläche definiert ist, umfassend einen Verdichtungsraum zur Aufnahme von miteinander zu verbindenden Verbindungsbereichen der Leiter, wobei der Verdichtungsraum in einer ersten Achsenrichtung an zwei einander gegenüberliegenden Seiten durch eine Arbeitsfläche einer in die erste Achsenrichtung Ultraschallschwingungen übertragenden Sonotrode und eine Gegenfläche einer Gegenelektrode sowie in einer zweiten Achsenrichtung an zwei einander gegenüberliegenden Seiten durch eine Begrenzungsfläche eines in die zweite Achsenrichtung verfahrbaren Schieberelements und eine Begrenzungsfläche eines Begrenzungselements begrenzt ist, wobei der Verdichtungsraum zumindest ein Leitelement aufweist, das seitlich zum Schieberelement angeordnet und relativ zum Schieberelement in die zweite Achsenrichtung bewegbar ist, und das Leitelement eine Führungskante zur Positionierung eines Leiter in der zweiten Achsenrichtung relativ zur Begrenzungsfläche des Begrenzungselements aufweist.

Eine Vorrichtung der eingangs genannten Art ist aus der EP 1 765 545 A1 bekannt. Vor Durchführung des Ultraschallschweißvorgangs werden miteinander zu verschweißende Leiter mit ihren Blankbereichen so in den geöffneten Verdichtungsraum eingelegt, dass die Blankbereiche der Leiter mit Abschnitten, die die Verbindungsbereiche des Schweißknotens bei einer Schwingungsbeaufschlagung durch die Sonotrode in einer ersten Achsenrichtung ausbilden, in einer einander überdeckenden Stapelanordnung und parallel zueinander ausgerichtet vor der dem Schieberelement gegenüberliegenden Begrenzungsfläche des Begrenzungselements positioniert sind. Um diese Relativpositionierung gegenüber der Begrenzungsfläche zu erzielen, ist das Schieberelement der bekannten Vorrichtung mit seitlich zum Schieberelement angeordneten und sich in die zweite Achsenrichtung, also parallel zum Verfahrweg des Schieberelements erstreckenden Leitelementen versehen, die jeweils eine Führungskante aufweisen, welche in einer bevorzugten Ausführungsform zur Begrenzungsfläche des Begrenzungselements hin geneigt verläuft, sodass die Führungskanten zusammen mit der Begrenzungsfläche des Begrenzungselements eine V-förmig ausgebildete Ausnehmung ausbilden, die beim Einlegen der Leiter in den geöffneten Verdichtungsraum für die gewünschte eindeutige Positionierung der Blankbereiche der Leiter in der zweiten Achsenrichtung sorgt.

Im Gegensatz zu der vorstehend erläuterten Positionierungshilfe zur korrekten Positionierung der Blankbereiche der Leiter in der zweiten Achsenrichtung ist die korrekte Positionierung der Blankbereiche im Verdichtungsraum in Längsachsenrichtung der Leiter, also in einer dritten Achsenrichtung, derart, dass sich bei der nachfolgenden Schwingungsbeaufschlagung die Verbindungsbereiche in der gewünschten Länge ausbilden, vom Geschick der die Leiter in den Verdichtungsraum einlegenden Bedienperson abhängig.

Hierdurch ist es möglich, dass letztendlich fehlerhafte Schweißknoten hergestellt werden oder geringstenfalls nicht sichergestellt werden kann, dass Toleranzvorgaben betreffend die geometrischen Parameter des Schweißknotens, also insbesondere die Länge der Verbindungsbereiche, nicht eingehalten werden können.

Der vorliegenden Erfindung liegt daher die Aufgabe zugrunde, die Fertigungsqualität bei der Herstellung von Ultraschallschweißverbindungen zu verbessern.

Diese Aufgabe wird durch eine Vorrichtung mit den Merkmalen des Anspruchs 1 gelöst.

Bei der erfindungsgemäßen Vorrichtung ist das Leitelement mit einer Anschlagkante zur axialen Positionierung der Umhüllungsendfläche versehen, wobei der Abstand der Anschlagkante von der Arbeitsfläche der Sonotrode so gewählt ist, dass bei einem Anschlag der Umhüllungsendfläche gegen die Anschlagkante und in einer dritten Achsenrichtung parallel zur Arbeitsfläche der Sonotrode und der Begrenzungsfläche des Begrenzungselements ausgerichtetem Blankbereich sich der Blankbereich mit einer definierten Länge innerhalb des Verdichtungsraumes erstreckt.

Die erfindungsgemäße Vorrichtung ermöglicht es also, dass eine Bedienperson beim Einlegen der Blankbereichs der Leiter in den geöffneten Verdichtungsraum lediglich noch darauf achten muss, dass die Umhüllungsendflächen der Leiter gegen die Anschlagkante des Leitelements anschlagen, um sicherzustellen, dass der Blankbereich des Leiters mit einem Abschnitt definierter Länge in den Verdichtungsraum hineinragt.

Die Positionierung der Leiter in deren Längsachsenrichtung ist somit nicht mehr abhängig vom "Augenmaß" der Bedienperson, sondern ist vermittels der Anschlagkante reproduzierbar einstellbar.

Bei den in der erfindungsgemäßen Vorrichtung miteinander verschweißten Leitern handelt es sich in der Regel um stabförmige, also im Wesentlichen in ihrer Dimension durch die Längserstreckung bestimmte Leiter, die eine zumindest geringe Biegesteifigkeit aufweisen, um - solange keine radiale Belastung auf die Leiter wirkt - trotz flexibler Ausbildung ihre Längserstreckung beizubehalten. Derartige Leiter können beispielsweise als eine isolierte Litze ausgebildet sein, die, insbesondere in der Ausbildung als Litze zu Litzenpaketen aus einer Mehrzahl von Litzen zusammengefasst, in den Verdichtungsraum eingelegt werden.

Vorzugsweise weist die Anschlagkante eine Kantenstärke auf, die kleiner ist als 2 mm, sodass die gewünschte Wirkung der Anschlagkante als Widerstand gegen eine axiale Verschiebung der Umhüllungsendfläche über die Anschlagkante hinaus auch dann noch gegeben ist, wenn ein Leiter mit geringer relativer Neigung zur Anschlagkante in Richtung auf die Anschlagkante bewegt wird. Grundsätzlich gilt natürlich dabei, dass je geringer die Kantenstärke der Anschlagkante ausgebildet ist, desto ausgeprägter kann die Anschlagwirkung realisiert werden; selbst dann noch, wenn aufgrund einer mit besonders geringer Schichtstärke ausgeführten Umhüllung die Umhüllungsendfläche einen Absatz von minimaler Höhe gegenüber dem Blankbereich ausbildet, so dass der Absatz bereits bei geringer relativer Neigung zur Anschlagkante über eine Kante mit vergleichbar wesentlich größerer Kantenstärke leicht hinweg gleiten könnte.

Besonders bevorzugt wird daher auch die Ausbildung einer Kantenstärke, die kleiner als 1,5 mm oder gar kleiner als 1 mm ist, wobei die Wahl der tatsächlichen Kantenstärke letztendlich einen Kompromiss darstellt, zwischen der gewünschten Anschlagwirkung und etwa der Vermeidung einer Verletzungsgefahr für die Bedienperson bei zu geringen Kantenstärken, also zu scharfkantigen Anschlagkanten.

Besonders vorteilhaft ist es, wenn die Anschlagkante durch die Führungskante ausgebildet ist, sodass die Führungskante mit einer entsprechenden Doppelfunktion ausgestattet ist.

Wenn das Leitelement mit einer Zustelleinrichtung versehen ist, die eine Positionierung der Anschlagkante gegenüber der Arbeitsfläche der Sonotrode in der dritten Achsenrichtung ermöglicht, kann auf komfortable oder besonders zeitsparende Weise die Länge des Abschnitts, mit der der Blankbereich in den Verdichtungsraum hineinragt, veränderbar eingestellt werden.

Wenn die Zustelleinrichtung eine Kopplungseinrichtung zwischen dem Leitelement und dem Schieberelement aufweist, kann die Einstellung der Positionierung der Anschlagkante über eine Verstellung des Leitelements gegenüber dem Schieberelement erfolgen.

In dem Fall, wenn die Anschlagkante an einem an dem Leitelement angeordneten Anschlagkörper ausgebildet ist, kann eine Anpassung der gewünschten Positionierung der Anschlagkante gegebenenfalls über den Austausch des Anschlagkörpers erfolgen.

Nachfolgend wird eine bevorzugte Ausführungsform der Vorrichtung anhand der Zeichnung näher erläutert.

Es zeigen:
- **Fig. 1**: eine Vorderansicht eines Verdichtungsraums einer Ultraschallschweißvorrichtung mit zwei in einer Stapelanordnung übereinander angeordneten Verbindungsbereichen von miteinander zu verschweißenden Leitern;
- **Fig. 2**: den in **Fig. 1** dargestellten Verdichtungsraum in Draufsicht;
- **Fig. 3**: den in **Fig. 1** dargestellten Verdichtungsraum in einer Schnittansicht gemäß Schnittlinienverlauf III-III;
- **Fig. 4**: den in **Fig. 1** dargestellten Verdichtungsraum in Schließstellung;
- **Fig. 5**: ein Leitelement in Seitenansicht;
- **Fig. 6**: das in **Fig. 5** dargestellte Leitelement in Draufsicht;
- **Fig. 7**: das in **Fig. 5** dargestellte Leitelement in isometrischer Darstellung;
- **Fig. 8**: eine alternative Ausführungsform eines Leitelements in isometrischer Darstellung;
- **Fig. 9**: einen Verdichtungsraum mit Leitelementen in isometrischer Darstellung;
- **Fig. 10**: eine Prinzipdarstellung einer Ultraschallschweißvorrichtung.

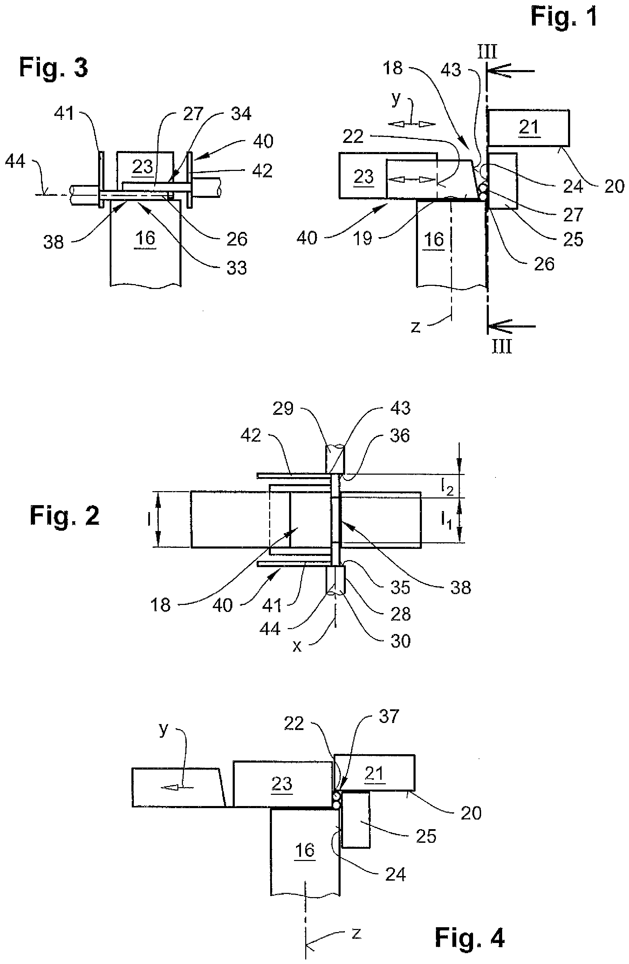

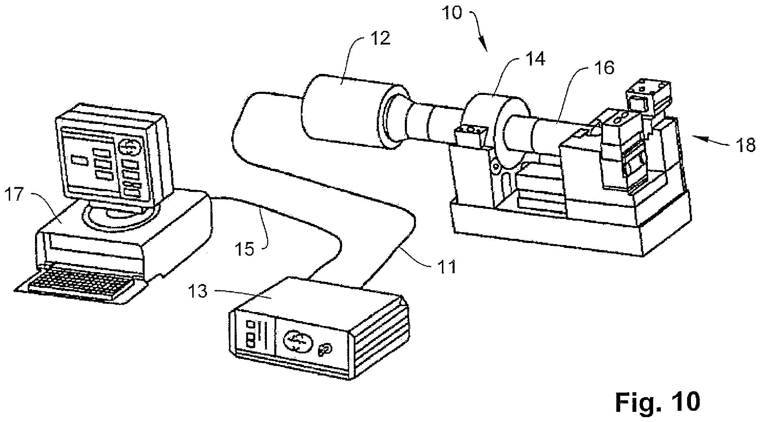

**Fig. 10** zeigt die grundsätzliche Anordnung von Komponenten einer Ultraschallschweißvorrichtung 10, die einen Konverter 12, einen Booster 14 sowie eine Sonotrode 16 umfasst. Die Sonotrode 16 bzw. eine dieser zugeordnete Gegenelektrode 21 begrenzen, wie insbesondere in **Fig.1** dargestellt ist, in einer ersten Achsenrichtung (z-Achse) einen Verdichtungsraum 18, der in Höhe und Breite verstellbar ist, um den Querschnitt des Verdichtungsraums 18 an die Anzahl bzw. den Querschnitt der miteinander zu verschweißenden Leiter einstellen zu können. Der Konverter 12 wird über eine Leitung 11 mit einem Generator 13 verbunden, der seinerseits über eine Leitung 15 mit einem Rechner 17 verbunden ist, um Schweißparameter bzw. die Querschnittsgeometrie der miteinander zu verschweißenden Leiter einzugeben. Die Leistungsabgabe des Generators 13 kann sodann bestimmt werden, um mittels eines in dem Rechner 17 abgespeicherten Programms die erforderlichen Schweißparameter abzurufen und entsprechend mittels des Konverters 12 Ultraschallschwingungen zu erzeugen, die über den Booster 14 auf die Sonotrode 16 bzw. deren Arbeitsfläche 19 (**Fig.1**) übertragen werden.

Die **Fig. 1** und **4** zeigen die wesentlichen Elemente des im Querschnitt verstellbaren, also in den Ausführungsbeispielen in Höhe und Breite verstellbaren Verdichtungsraums 18. Der Verdichtungsraum 18 ist in der ersten Achsenrichtung (z-Achse) an zwei einander gegenüberliegenden Seiten durch eine Arbeitsfläche 19 der Ultraschallschwingungen übertragenden Sonotrode 16 und eine Gegenfläche 20 einer in einer zweiten Achsenrichtung (y-Achse) verfahrbaren Gegenelektrode 21 begrenzt. In der zweiten Achsenrichtung, die in **Fig. 1** durch die y-Achse dargestellt ist, ist der Verdichtungsraum 18 an zwei einander gegenüberliegenden Seiten durch eine Begrenzungsfläche 22 eines in y-Achsenrichtung verfahrbaren Schieberelements 23 und eine Begrenzungsfläche 24 eines ebenso wie die Gegenelektrode 21 in die z-Achsenrichtung verfahrbaren Begrenzungselements 25 begrenzt.

Bei dem in **Fig. 1** dargestellten Ausführungsbeispiel des Verdichtungsraums 18 befinden sich zwei in Stapelanordnung übereinander liegend angeordnete Verbindungsbereiche 26, 27 von miteinander mittels einer Ultraschallschweißverbindung zu verbindenden Leitern 28, 29 auf der Arbeitsfläche 19 der Sonotrode 16, wobei **Fig. 1** die Verbindungsbereiche 26, 27 unmittelbar nach dem Einlegen in den geöffneten Verdichtungsraum 18 zeigt.

**Fig. 4** zeigt den Verdichtungsraum 18 in der geschlossenen Konfiguration, in der die den Verdichtungsraum 18 begrenzenden Komponenten, also die Sonotrode 16, die Gegenelektrode 21, das Schieberelement 23 und das Begrenzungselement 25, so gegeneinander verfahren sind, dass der nunmehr in seinem Volumen reduzierte Verdichtungsraum 18 eine Form 37 ausbildet, die bei einer Beaufschlagung der Verbindungsbereiche 26, 27 der Leiter 28, 29 mit mechanischen Schwingungen der Sonotrode 16 in einem Reibschweißvorgang eine Komprimierung und Verbindung der Verbindungsbereiche 26, 27 miteinander zur Ausbildung eines Schweißknotens ermöglicht.

Wie aus einer Zusammenschau der **Fig. 1** bis **3** deutlich wird, ist der Verdichtungsraum 18 mit einer Leiteinrichtung 40 versehen, die im vorliegenden Fall zwei Leitelemente 41, 42 umfasst, welche beidseitig des Schieberelements 23 angeordnet sind und, wie durch den in **Fig. 1** eingetragenen Doppelpfeil verdeutlicht wird, relativ zum Schieberelement 23 in der zweiten Achsenrichtung (y-Achse) verschiebbar sind. Die Leitelemente 41, 42 sind jeweils mit einer Anschlagkante 43 zur axialen Positionierung der Verbindungsbereiche 26, 27 der Leiter 28, 29 in der dritten Achsenrichtung (x-Achse) im Verdichtungsraum 18 versehen. Gleichzeitig sind die Anschlagkanten 43 im Fall des vorliegenden Ausführungsbeispiels der Leiteinrichtung 40 als Führungskanten ausgebildet, die bei einem Einlegen der Blankbereiche 33, 34 der Leiter 28, 29 in den geöffneten Verdichtungsraum 18 dazu dienen, die Blankbereiche 33, 34 in der zweiten Achsenrichtung (y-Achse) so zu positionieren, dass die Blankbereiche 33, 34 an der Begrenzungsfläche 24 des Begrenzungselements 25 anliegen oder zumindest unmittelbar benachbart zu der Begrenzungsfläche 24 angeordnet sind.

Neben dieser Positionierung der Blankbereiche 33, 34 in y-Achsenrichtung oder bezogen auf eine Längsachse 44 der Leiter 28, 29 in radialer Richtung, ermöglichen, wie insbesondere der **Fig. 2** zu entnehmen ist, die Anschlagkanten 43 eine axiale Positionierung der Leiter 28, 29 bzw. deren Blankbereiche 33, 34, dadurch, dass Umhüllungsendflächen 35, 36 einer isolierenden Umhüllung 30 der Leiter 28, 29 während des Einlegevorgangs zur axialen Anlage gegen die Anschlagkanten 43 der Leitelemente 41, 42 gebracht werden. Wie insbesondere **Fig. 2** zeigt, bestimmt somit die axiale Anlage der Umhüllungsendflächen 35, 36 gegen die Anschlagkanten 43 die Länge l, mit der die Blankbereiche 33, 34 der Leiter 28, 29 in den Verdichtungsraum 18 hineinragen.

Bei der in **Fig. 2** beispielhaft dargestellten Stapelanordnung der Blankbereiche 33, 34, die zur Herstellung eines Durchgangsschweißknotens 38 dient, so dass sich die über den Durchgangsschweißknoten 38 miteinander verbundenen Leiter 28, 29 in entgegengesetzte Richtungen erstrecken, definieren somit die Anschlagkanten 43 der Leitelemente 41, 42 die jeweilige Länge l, mit der sich die Blankbereiche 33, 34 aus unterschiedlichen Richtungen in der dritten Achsenrichtung (x-Achse) im Verdichtungsraum 18 erstrecken, wodurch einerseits die Länge l₁ der Verbindungsbereiche 26, 27 der Blankbereiche 33, 34 und somit die Länge des durch den Ultraschallschweißvorgang hergestellten Durchgangschweißknotens 38 definiert ist. Zum anderen wird durch die Länge l, mit der die Blankbereiche 33, 34 sich im Verbindungsraum 18 erstrecken, die Länge l₂ vorgegeben, also der nach Herstellung des Durchgangsschweißknotens 38 zwischen den Umhüllungsendflächen 35, 36 der Leiter 28, 29 und den Verbindungsbereichen 26, 27, also dem Durchgangsschweißknoten 38, verbleibende Abstand.

Somit wird die gewünschte Knotengeometrie durch die an den Leitelementen 41, 42 ausgebildeten Anschlagkanten 43 vorgegeben.

Wie aus einer Zusammenschau der **Fig. 1** und **4** folgt, werden nach einer Schließung des Verdichtungsraums 18 durch entsprechende Zustellbewegungen der Gegenelektrode 21, des Schieberelements 23 und des Begrenzungselements 25 die Leitelemente 41, 42 aus dem Einwirkungsbereich der Sonotrode 16 verfahren, um den nachfolgenden Ultraschallschweißvorgang nicht zu behindern.

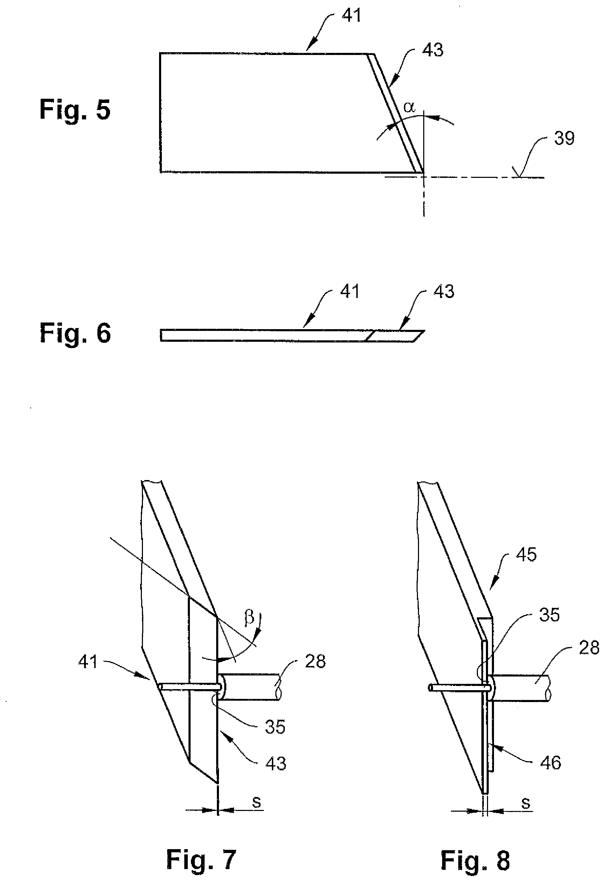

In den **Fig. 5** und **6** ist ein Leitelement 41mit einer Anschlagkante 43, die gleichzeitig als Führungskante zur eingangs beschriebenen radialen Positionierung der Leiter 28, 29 dient und einen Neigungswinkel α gegenüber einer durch die Arbeitsfläche 19 der Sonotrode 16 (**Fig.1**) definierten Arbeitsebene 39 aufweist, in Einzeldarstellung dargestellt. Der Neigungswinkel α wird vorzugsweise entsprechend der Anzahl und dem Durchmesser der in den Verdichtungsraum eingelegten Leiter gewählt und beträgt in der Regel zwischen 20 und 60°.

**Fig. 7** zeigt, dass die Anschlagkante 43 als eine mit einer einseitigen Schräge versehene Kante ausgebildet ist, die einen Kantenwinkel β aufweist, so dass eine Kantenstärke s₁ minimiert ist und die Kantenstärke s praktisch gegen Null geht.

**Fig. 8** zeigt eine alternative Ausgestaltung eines Leitelements 45 mit einer als Stufenkante ausgebildeten Anschlagkante 46, die durch eine abgestufte Ausgestaltung einer Führungskante des Leitelements 45 ausgebildet ist.

Ferner verdeutlichen die **Fig. 7** und **8** die axiale Anlage einer Umhüllungsendfläche 35 eines Leiters 28 gegen die Anschlagkante 43 bzw. 46.

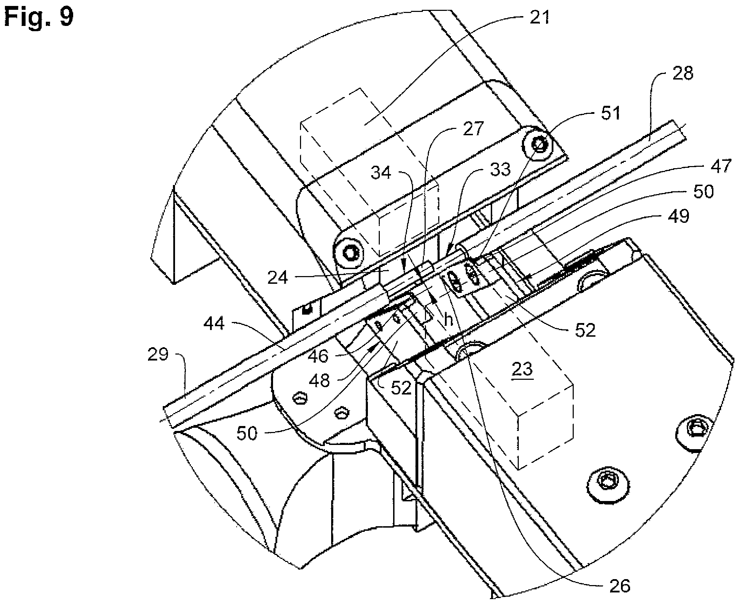

Eine Ausgestaltung von Anschlagkanten 47 als abgestufte Kanten ist auch der in **Fig. 9** dargestellten Ausführungsform von Leitelementen 48, 49 zu entnehmen. Wie die isometrische Darstellung gemäß **Fig. 9** zeigt, sind die Anschlagkanten 47 an einem an dem jeweiligen Leitelement 48, 49 angeordneten Anschlagkörper 50 ausgebildet. Die Anschlagkörper 50 sind im vorliegenden Fall über Schraubverbindungen 51 lösbar mit einem Träger 52 des jeweiligen Leitelements 48, 49 verbunden.

Wie aus der isometrischen Darstellung besonders deutlich hervorgeht, dient die Anschlagkante 47 der Leitelemente 48, 49 bei einem Einliegen der Blankbereiche 33, 34 der Leiter 28, 29 als Führungskante, die jeweils zu der Begrenzungsfläche 24 des Begrenzungselements 25 und der Arbeitsfläche 19 der Sonotrode 16 geneigt verläuft, derart, dass die Blankbereiche 33, 34 bei einer radialen Führung längs den Anschlagkanten 47 unmittelbar angrenzend an die Begrenzungsfläche 24 auf der Arbeitfläche 19 der Sonotrode 16 radial positioniert werden. Gleichzeitig sorgen die Anschlagkanten 47 dafür, dass bei axialer Anlage der Umhüllungsendflächen 35, 36 die Blankbereiche 33, 34 sich mit einer definierten Länge l in den geöffneten Verdichtungsraum 18 hineinerstrecken (**Fig. 2**).

Bei dem in **Fig. 9** dargestellten Ausführungsbeispiel ist die Höhe h oder der Überstand der Anschlagkanten gegenüber dem Träger 52 in radialer Richtung bezogen auf die Längsachse 44 der Leiter 28, 29 so gewählt, dass die Höhe h zumindest so groß ist, dass ein radialer Kontakt zwischen den Anschlagkanten 47 und den Blankbereichen 33, 34 gegeben ist und somit eine sichere axiale Abstützung der Umhüllungsendflächen 35, 36 an den Anschlagkanten 47 gewährleistet ist.

## Patentansprüche

1. Vorrichtung zum Verschweißen von stabförmigen, mit einer äußeren isolierenden Umhüllung (30) versehenen elektrischen Leitern (28, 29), die von der Umhüllung befreite Blankbereiche (33, 34) aufweisen, deren Länge (l) durch eine axiale Umhüllungsendfläche (35, 36) definiert ist, umfassend einen Verdichtungsraum (18) zur Aufnahme von miteinander zu verbindenden Verbindungsbereichen (26,27) der Leiter, wobei der Verdichtungsraum in einer ersten Achsenrichtung (z) an zwei einander gegenüberliegenden Seiten durch eine Arbeitsfläche (19) einer in die erste Achsenrichtung Ultraschallschwingungen übertragenden Sonotrode (16) und eine Gegenfläche (20) einer Gegenelektrode (21) sowie in einer zweiten Achsenrichtung (y) an zwei gegenüberliegenden Seiten durch eine Begrenzungsfläche (22) eines in die zweite Achsenrichtung verfahrbaren Schieberelementes (23) und eine Begrenzungsfläche (24) eines Begrenzungselementes (25) begrenzt ist, wobei der Verdichtungsraum zumindest ein Leitelement (41, 42, 45, 48, 49) aufweist, das seitlich zum Schieberelement angeordnet und relativ zum Schieberelement in die zweite Achsenrichtung bewegbar ist, und das Leitelement eine Führungskante zur Positionierung eines Leiters in der zweiten Achsenrichtung relativ zur Begrenzungsfläche des Begrenzungselementes aufweist,
**dadurch gekennzeichnet,**
**dass** das Leitelement mit einer Anschlagkante (43, 46, 47) zur axialen Positionierung der Umhüllungsendfläche versehen ist, wobei der Abstand der Anschlagkante von der Arbeitsfläche der Sonotrode so gewählt ist, dass bei einem Anschlag der Umhüllungsendfläche gegen die Anschlagkante und in einer dritten Achsenrichtung parallel zur Arbeitsfläche der Sonotrode und der Begrenzungsfläche des Begrenzungselements ausgerichtetem Blankbereich sich der Blankbereich mit einer definierten Länge (l) innerhalb des Verdichtungsraumes erstreckt.

2. Vorrichtung nach Anspruch 1,
**dadurch gekennzeichnet,**
**dass** die Anschlagkante (43, 46, 47) eine Kantenstärke aufweist, die kleiner als 2 mm ist.

3. Vorrichtung nach Anspruch 2,
**dadurch gekennzeichnet,**
**dass** die Anschlagkante (43, 46, 47) eine Kantenstärke aufweist, die kleiner als 1,5 mm ist.

4. Vorrichtung nach Anspruch 2,
**dadurch gekennzeichnet,**
**dass** die Anschlagkante (43, 46, 47) eine Kantenstärke aufweist, die kleiner als 1 mm ist.

5. Vorrichtung nach einem der vorangehenden Ansprüche,
**dadurch gekennzeichnet,**
**dass** die Anschlagkante (43, 46, 47) durch die Führungskante ausgebildet ist.

6. Vorrichtung nach einem der vorangehenden Ansprüche,
**dadurch gekennzeichnet,**
**dass** das Leitelement mit einer Zustelleinrichtung versehen ist, die eine Positionierung der Anschlagkante (43, 46, 47) gegenüber der Arbeitsfläche (19) der Sonotrode (16) in der dritten Achsenrichtung (x) ermöglicht.

7. Vorrichtung nach Anspruch 6,
**dadurch gekennzeichnet,**
**dass** die Zustelleinrichtung eine Kopplungseinrichtung zwischen dem Leitelement (41, 42, 45, 48, 49) und dem Schieberelement (23) aufweist.

8. Vorrichtung nach einem der vorangehenden Ansprüche,
**dadurch gekennzeichnet,**
**dass** die Anschlagkante (47) an einem an dem Leitelement (48, 49) angeordneten Anschlagkörper (50) ausgebildet ist.

9. Vorrichtung nach Anspruch 9,
**dadurch gekennzeichnet,**
**dass** der Anschlagkörper (50) austauschbar mit dem Leitelement (48, 49) verbunden ist.

## Claims

1. A device for welding rod-shaped electrical conductors (28, 29) provided with an outer insulating sheath (30) and having blank regions (33, 34) free of the sheath, whose length (1) is defined by an axial sheath end surface (35, 36), the device comprising a compression space (18) for receiving connecting regions (26, 27) of the conductors to be connected to each other, the compression space being limited in a first axial direction (z) at two opposing sides by a working surface (19) of a sonotrode (16) transmitting ultrasonic vibrations in the first axial direction and by an opposing surface (20) of an opposing electrode (21) as well as in a second axial direction (y) at two opposing sides by a limiting surface (22) of a slider element (23) displaceable in the second axial direction and by a limiting surface (24) of a limiting element (25), the compression space comprising at least one guiding element (41, 42, 45, 48, 49) arranged laterally to the slider element and movable relative to the slider element in the second axial direction, and the guiding element having a guiding edge for positioning a conductor in the second axial direction relative to the limiting surface of the limiting element,
**characterized in that**
the guiding element is provided with a stop edge (43, 46, 47) for axially positioning the sheath end surface, the distance between the stop edge and the working surface of the sonotrode being selected such that when the sheath end surface abuts against the stop edge and the blank region is aligned in a third axial direction parallel to the working surface of the sonotrode and the limiting surface of the limiting element, a defined length (1) of the blank region extends within the compression space.

2. The device according to claim 1,
**characterized in that**
the stop edge (43, 46, 47) has an edge thickness smaller than 2 mm.

3. The device according to claim 2,
**characterized in that**
the stop edge (43, 46, 47) has an edge thickness smaller than 1.5 mm.

4. The device according to claim 2,
**characterized in that**
the stop edge (43, 46, 47) has an edge thickness smaller than 1 mm.

5. The device according to any one of the preceding claims,
**characterized in that**
the stop edge (43, 46, 47) is formed by the guiding edge.

6. The device according to any one of the preceding claims,
**characterized in that**
the guiding element is provided with an adjusting device allowing positioning the stop edge (43, 46, 47) with respect to the working surface (19) of the sonotrode (16) in the third axial direction (x).

7. The device according to claim 6,
**characterized in that**
the adjusting device comprises a coupling device between the guiding element (41, 42, 45, 48, 49) and the slider element (23).

8. The device according to any one of the preceding claims,
**characterized in that**
the stop edge (47) is formed on a stop body (50) arranged on the guiding element (48, 49).

9. The device according to claim 8,
**characterized in that**
the stop body (50) is connected to the guiding element (48, 49) in an exchangeable manner.

## Revendications

1. Dispositif pour souder des conducteurs électriques (28, 29) en forme de tige pourvus d'un enveloppe (30) extérieur isolant et ayant des zones nues (33, 34) sans l'enveloppe, dont longueur (l) étant définie par une surface d'extrémité d'enveloppe (35, 36) axiale, le dispositif comprenant une salle de compression (18) pour recevoir des zones de connexion (26, 27) des conducteurs à être reliées les unes aux autres, la salle de compression étant limitée dans une première direction (z) axiale à deux côtés opposés par un plan de travail (19) d'un sonotrode (16) transmettant des vibrations ultrasoniques dans la première direction axiale et par une surface (20) opposée d'un électrode (21) opposé ainsi que dans une deuxième direction (y) axiale à deux côtés opposés par une surface de limitation (22) d'un élément (23) coulissant déplaçable dans la deuxième direction axiale et par une surface de limitation (24) d'un élément de limitation (25), la salle de compression comprenant au moins un élément de guidage (41, 42, 45, 48, 49) disposé latéralement à l'élément coulissant et déplaçable par rapport à l'élément coulissant dans la deuxième direction axiale, et l'élément de guidage ayant un bord de guidage pour positionner un conducteur dans la deuxième direction axiale par rapport à la surface de limitation de l'élément de limitation,
**caractérisé en ce que**
l'élément de guidage est pourvu d'un bord d'arrêt (43, 46, 47) pour positionner axialement la surface d'extrémité d'enveloppe, la distance entre le bord d'arrêt et le plan de travail du sonotrode étant choisie de telle manière que quand la surface d'extrémité d'enveloppe appui contre le bord d'arrêt et la zone nue est alignée dans une troisième direction axiale parallèle au plan de travail du sonotrode et la surface de limitation de l'élément de limitation, une longueur (l) définie de la zone nue s'étend dans la salle de compression.

2. Dispositif selon la revendication 1,
**caractérisé en ce que**
le bord d'arrêt (43, 46, 47) a une épaisseur de bord plus petite que 2 mm.

3. Dispositif selon la revendication 2,
**caractérisé en ce que**
le bord d'arrêt (43, 46, 47) a une épaisseur de bord plus petite que 1,5 mm.

4. Dispositif selon la revendication 2,
**caractérisé en ce que**
le bord d'arrêt (43, 46, 47) a une épaisseur de bord plus petite que 1 mm.

5. Dispositif selon l'une quelconque des revendications précédentes,
**caractérisé en ce que**
le bord d'arrêt (43, 46, 47) est formé par le bord de guidage.

6. Dispositif selon l'une quelconque des revendications précédentes,
**caractérisé en ce que**
l'élément de guidage est pourvu d'un dispositif d'ajustement facilitant le positionnement du bord d'arrêt (43, 46, 47) par rapport au plan de travail (19) du sonotrode (16) dans la troisième direction (x) axiale.

7. Dispositif selon la revendication 6,
**caractérisé en ce que**
le dispositif d'ajustement comprend un dispositif de couplage entre l'élément de guidage (41, 42, 45, 48, 49) et l'élément (23) coulissant.

8. Dispositif selon l'une quelconque des revendications précédentes,
**caractérisé en ce que**
le bord d'arrêt (47) est formé à un corps d'arrêt (50) disposé à l'élément de guidage (48, 49).

9. Dispositif selon la revendication 8,
**caractérisé en ce que**
le corps d'arrêt (50) est relié à l'élément de guidage (48, 49) de manière échangeable.
